**Europäisches Patentamt**

**European Patent Office**

**Office européen des brevets**

(19)

(11) Veröffentlichungsnummer : **0 014 422**
**B1**

(12)

# EUROPÄISCHE PATENTSCHRIFT

(45) Veröffentlichungstag der Patentschrift :
16.02.83

(51) Int. Cl.³ : **G 21 C 19/06**

(21) Anmeldenummer : **80100440.9**

(22) Anmeldetag : **29.01.80**

(54) **Lagergestell für Kernreaktorbrennelemente.**

(30) Priorität : **06.02.79 DE 2904362**

(43) Veröffentlichungstag der Anmeldung :
**20.08.80 Patentblatt 80/17**

(45) Bekanntmachung des Hinweises auf die Patenterteilung : **16.02.83 Patentblatt 83/07**

(84) Benannte Vertragsstaaten :
**AT CH FR IT**

(56) Entgegenhaltungen :
**DE A 2 701 137**
**DE A 2 913 982**
**FR A 2 304 993**
**US A 4 124 445**

(73) Patentinhaber : **BROWN BOVERI REAKTOR GmbH**
**Dudenstrasse 44**
**D-6800 Mannheim 1 (DE)**

(72) Erfinder : **Dander, Werner, Dr. Dipl.-Phys.**
**Berggewann 1**
**D-6940 Weinheim (DE)**

Jouve, 18, rue St-Denis, 75001 Paris, France

## Lagergestell für Kernreaktorbrennelemente

Die Erfindung betrifft ein Lagergestell für sich in Längsrichtung erstreckende Brennelemente, das sich aus mehreren Gestelleinheiten zusammensetzt, wobei eine Gestelleinheit Schächte zur Aufnahme je eines Brennelements aufweist und wobei die Wände der Schächte in ihrer Längserstreckung aus nahtlosen Blechen bestehen.

Gemäß einem älteren nicht vorveröffentlichten Vorschlag der DE-A-28 35 392 werden Wandungen der Schächte aus kreuzweise übereinander angeordneten Blechen gebildet, die mittels an ihren Rändern angebrachten Einschnitten gegenseitig in ihrer Lage gehalten sind. Als nachteilig hat sich herausgestellt, daß die zusammengesteckten Bleche an ihren Stoßstellen zu Verwerfungen neigen, so daß an diesen Stellen die Brennelemente beim Ein- oder Ausfahren anstoßen oder einhaken können.

Die aus dem DE-U-76 24 867 bekannte Ausbildung setzt z-förmig gebogene Bleche ein die sich über die Höhe des Lagergestells erstrecken und unter Verwendung von Verankerungsblechen derart verschraubt sind, daß Schächte zur Aufnahme der Brennelemente entstehen. Die Verschraubungen erstrecken sich dabei senkrecht zur Längsachse der Schächte. Bei dieser Konstruktion können unerwünschte Spannungen durch das Zusammenschrauben der Z-förmigen Profile auftreten. Außerdem ist die Herstellung dieser Profile aus borhaltigem Blech nicht unproblematisch.

Weiterhin sind aus der DE-A-27 01 137 Lagergestelle bekannt deren Schächte mittels angeschweißter Streben miteinander verbunden sind. Diese Version hat den Nachteil, daß bei frei werdenden Wärmespannungen Verwerfungen entstehen können.

Ähnlich konstruiert ist das Lagergestell, das aus der FR-A-2 304 993 bekannt ist, wobei zwei gegenüberliegende Wände eines Schachtes aus Blechplatten gebildet sind, die sich über die gesamte Breite einer Gestelleinheit erstrecken, und die zwei restlichen Wände eines Schachtes aus Blechplatten bestehen, welche lediglich die Breite eines Schachtes aufweisen.

Aufgabe der Erfindung ist es, ein Brennelement-Lagergestell anzugeben dessen Schacht-Wände aus ebenen, in der Längsrichtung durchgehenden Bleche bestehen, wobei weder ein Verschweißen untereinander oder mit Halterungen noch ein Verschrauben quer zur Längsachse der Schächte erforderlich ist.

Gelöst wird die Aufgabe erfindungsgemäß dadurch, daß die die Breite eines Schachtes aufweisenden Blechplatten mit Nasen versehen sind die in Aussparungen der die Breite einer Gestelleinheit aufweisenden Blechplatten eingerastet sind, daß alle Blechplatten einer Gestelleinheit mit ihren oberen und unteren Enden in Schlitze von Haltegittern hineinragen, daß die Haltegitter über Streben miteinander verbunden sind und daß durch die Schlitze der Abstand der Wände zueinander gegeben ist. Mit der angegebenen Lagergestellausbildung wurde eine spannungsfreie, einfach zu montierende und demontierende Konstruktion geschaffen.

Gemäß einer vorteilhaften Ausgestaltung sind die Blechplatten mit ihrem unteren Ende auf der Grundfläche der Schlitze aufgesetzt und weisen zwischen ihren oberen Enden und der Grundfläche ein Spiel auf. Die Blechplatten werden somit völlig spannungsfrei gehalten.

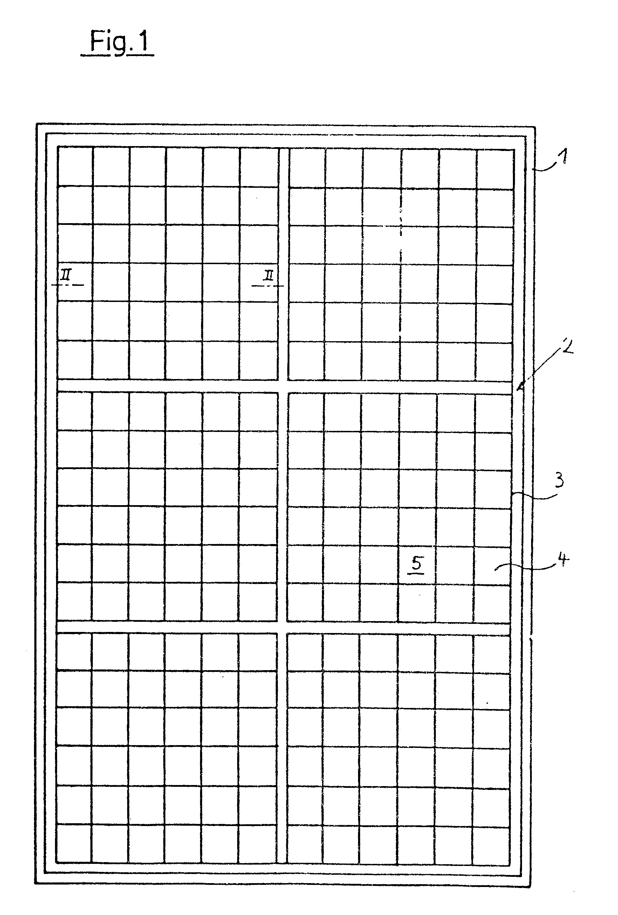

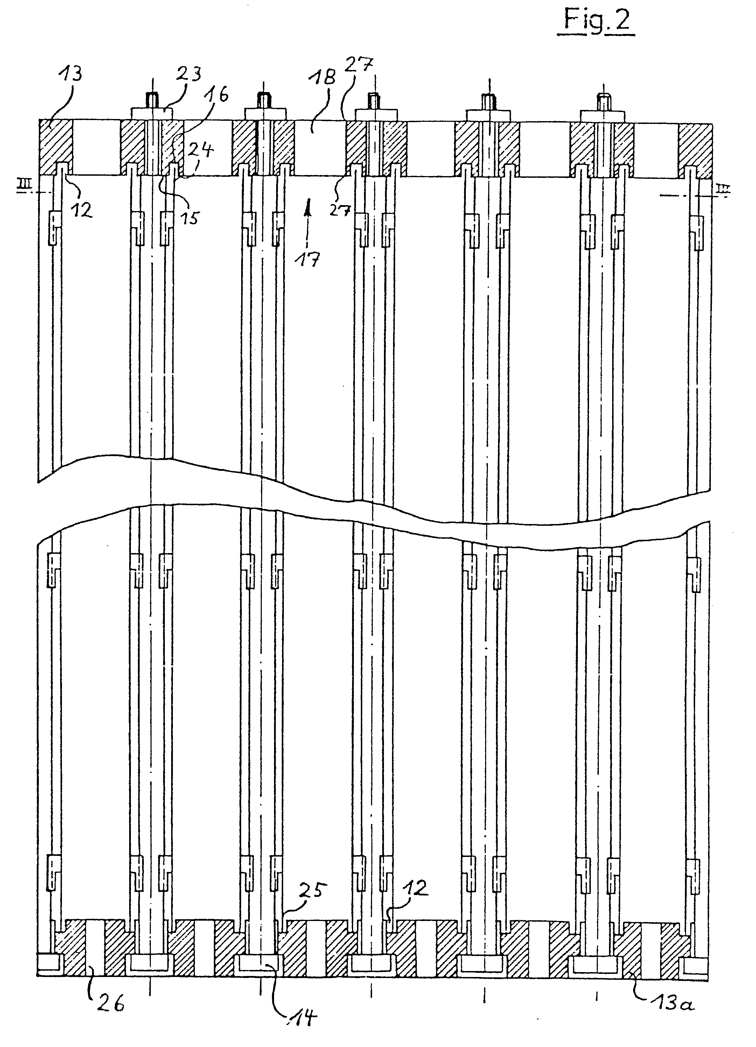

Das erfindungsgemäße Lagergestell wird anhand eines Ausführungsbeispiels und schematischen Zeichnungen Fig. 1 bis 7 beschrieben.

Es zeigen :

Figur 1 eine Aufsicht eines Lagerbeckens für Brennelemente ;

Figur 2 einen Längsschnitt durch eine Gestelleinheit, entlang der Linie II-II der Fig. 1 ;

Figur 3 einen Ausschnitt eines Querschnitts entlang der Linie III-III der Fig. 2 ;

Figuren 4 und 5 Blechplatten zur Bildung eines Schachtes ;

Figur 6 eine Ansicht in Pfeilrichtung 17 des Fig. 2 eines Haltegitters, und

Figur 7 eine andere Ausbildung eines Haltegitters.

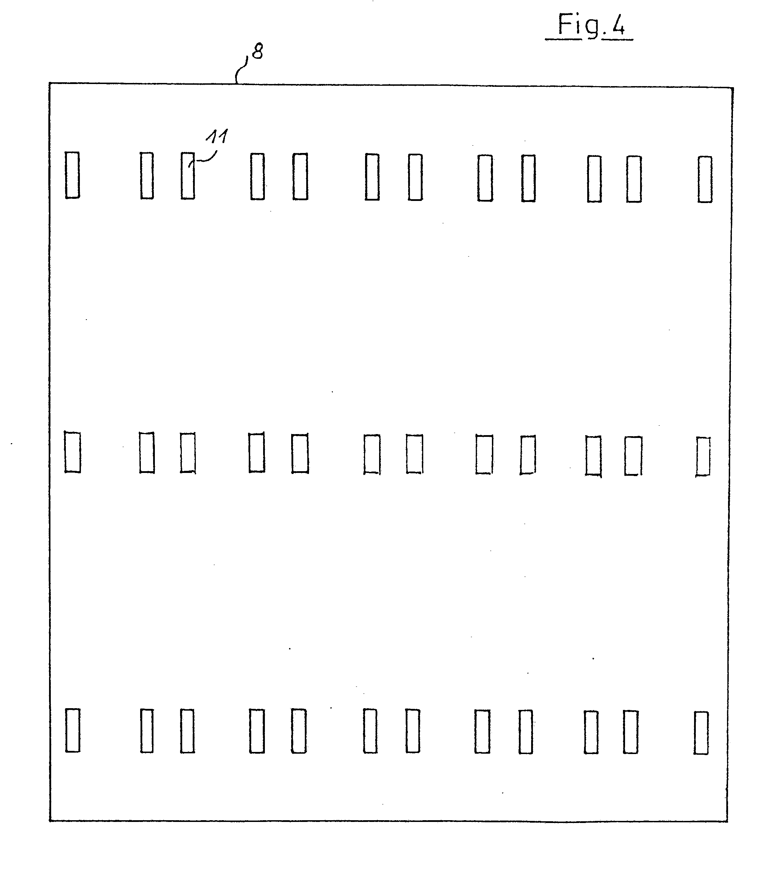

In einem Lagerbecken 1 für abgebrannte Brennelemente ist ein Lagergestell 2 angeordnet, das aus mehreren Gestelleinheiten 3 besteht. Je ein Schacht 4 dient zur Aufnahme eines Brennelements 5. Die einzelnen Gestelleinheiten sind in nicht dargestellter Weise am Boden des Lagerbeckens 1 verankert. Wie insbesondere aus der Fig. 3 zu ersehen ist, sind jeweils zwei gegenüberliegende Wände 7 eines Schachtes 4 aus Blechplatten 8 gebildet, die sich über die gesamte Breite einer Gestelleinheit erstrecken. Dagegen bestehen die beiden anderen Wände 7a aus Blechplatten 9 die lediglich die Breite eines Schachtes aufweisen. An den Blechplatten 9 sind Nasen 10 vorgesehen, die in Aussparungen 11 der Blechplatten 8 eingerastet sind.

Mit ihren oberen und unteren Enden 24, 25 ragen die Blechplatten 8, 9 in Schlitze 12 von Haltegittern 13, 13a. Durch diese Schlitze ist der Abstand aller Wände 7, 7a einer Gestelleinheit 3 zueinander gegeben. Mittels Spannschrauben 14, die mit einer Schulter 15 am oberen Haltegitter anliegen und Muttern 23 werden die Haltegitter 13, 13a derart gegeneinander verspannt, daß die Blechplatten 8, 9 mit ihren Enden 24, 25 zwar in die Schlitze 12 hineinragen, aber zwischen den oberen Enden 24 und der Grundfläche 16 der Schlitze 12 noch ein ausreichendes Spiel besteht.

Damit wird sichergestellt, daß die Blechplatten 8, 9 vollkommen spannungsfrei gehalten sind.

Die Figuren 4-7 zeigen zum besseren Verständnis der Erfindung die einzelnen Bestandteile einer Gestelleinheit 3. So ist in Fig. 4 eine Blechplatte 8 dargestellt, die sich über die gesamte Breite einer Gestelleinheit erstreckt. Die übereinander angeordneten drei Aussparungen 11 die-

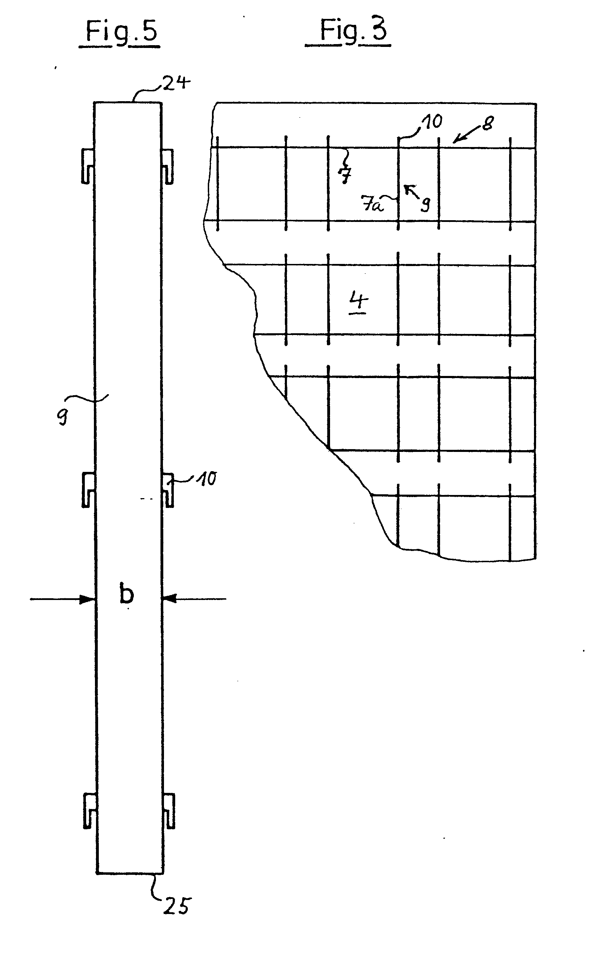

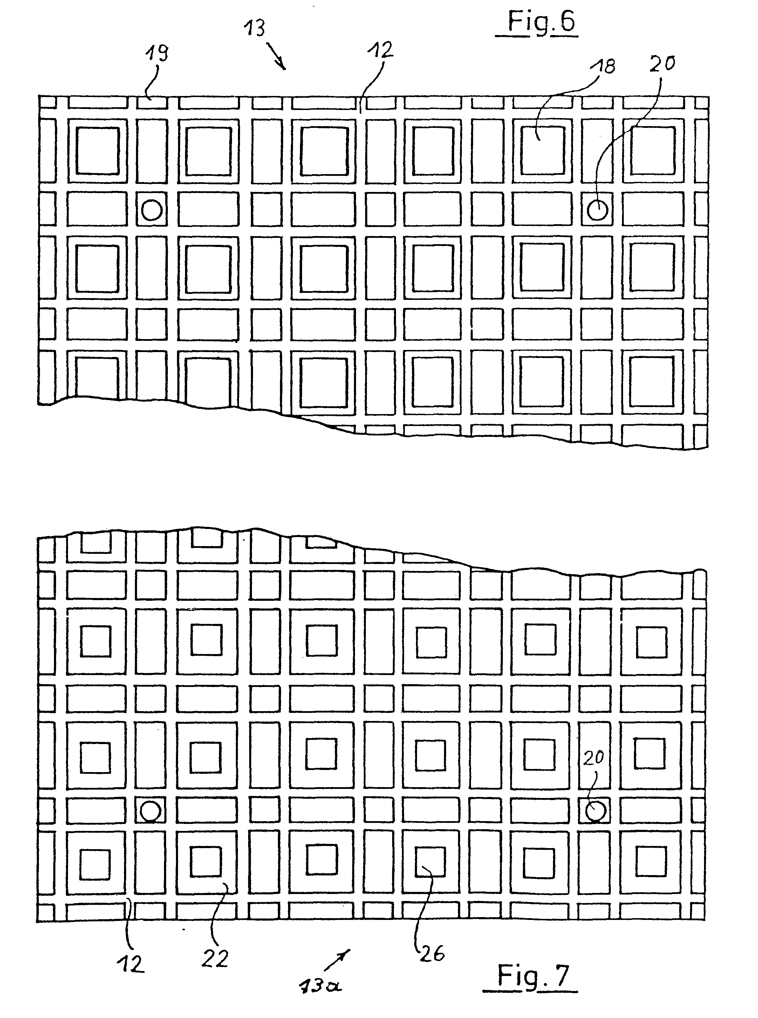

nén zur Aufnahme der Nasen 10 einer Blechplatte 9. In der Fig. 5 ist eine Blechplatte 9 gezeigt, deren Breitenmaß « b » der lichten Weite eines Schachtes 4 entspricht. Drei als Nasen 10 bezeichnete Vorsprünge dienen zum Verriegeln dieser Blechplatten 9 mit den Blechplatten 8. Eine Draufsicht eines Haltegitters 13 in Pfeilrichtung 17 zeigt gem. der Fig. 6 Aussparungen 18, die etwas größer als der Querschnitt der Brennelemente ausgebildet sind um ein problemloses Einführen derselben in den jeweiligen Schacht zu ermöglichen. Ein nicht dargestelltes Anschrägen der Kanten 27 erleichtert das Einführen bzw. Herausnehmen der Brennelemente. In den Wangen 19 sind Schlitze 12 angebracht in welche die Enden 24 der Bleche 8, 9 hineinragen. Bohrungen 20 dienen zur Aufnahme von Streben wie z. B. Spannschrauben 14 die ein Zusammenhalten des oberen und unteren Haltegitters einer Gestelleinheit sicherstellen, ohne daß dabei die Blechplatten 8, 9 Spannungen ausgesetzt werden. Die in dem unteren Haltebitter 13a (Fig. 7) angebrachten Schlitze 12 weisen die gleichen Abmessungen und Abstände zueinander auf wie die Schlitze in dem oberen Haltegitter 13. Durchbrüche 26 sind zum ungehinderten Durchfluß von Kühlmittel erforderlich. Auf der zwischen den Durchbrüchen 26 und den Schlitzen 12 verbleibenden Flächen 22 werden die Brennelemente abgestellt. Die Durchbrüche 26 können dabei gleichzeitig zur Zentrierung der Brennelemente dienen.

Die vorgeschlagene Ausbildung vermeidet einerseits Unstetigkeiten und Verwerfungen im Verlauf der Schachtwände und erfordert andererseits keinerlei Schweißarbeiten.

### Ansprüche

1. Lagergestell für sich in Längsrichtung erstreckende Brennelemente, das sich aus mehreren Gestelleinheiten zusammensetzt, wobei eine Gestelleinheit Schächte zur Aufnahme je eines Brennelements aufweist, und die Wände der Schächte in ihrer Längserstreckung aus nahtlosen Blechen bestehen, zwei gegenüberliegende Wände (7) eines Schachtes (4) aus Blechplatten (8) gebildet sind, die sich über die gesamte Breite einer Gestelleinheit (3) erstrecken, und die zwei restlichen Wände (7a) eines Schachtes aus Blechplatten (9) bestehen, welche lediglich die Breite eines Schachtes aufweisen dadurch gekennzeichnet, daß die die Breite eines Schachtes aufweisenden Blechplatten (9) mit Nasen (10) versehen sind die in Aussparungen (11) der die Breite einer Gestelleinheit aufweisenden Blechplatten (8) eingerastet sind, daß alle Blechplatten (8, 9) einer Gestelleinheit mit ihren oberen und unteren Enden (24, 25) in Schlitze (12) von Haltegittern (13, 13a) hineinragen, daß die Haltegitter über Streben (14) miteinander verbunden sind und daß durch die Schlitze (12) der Abstand der Wände zueinander gegeben ist.

2. Lagergestell nach Anspruch 1, dadurch gekennzeichnet, daß die Blechplatten (8, 9) mit ihrem unteren Ende (25) auf der Grundfläche (16) der Schlitze (12) aufgesetzt sind und daß zwischen ihren oberen Enden (24) und der Grundfläche der Schlitze (12) ein Spiel besteht.

### Claims

1. A storage rack for fuel assemblies extending in longitudinal direction, composed of several rack units with each rack unit having several wells for accommodating a fuel assembly in each well, with the walls of the wells in longitudinal direction consisting of seamless sheet metal, two walls (7) of a well (4) facing each other being constructed of metal sheets which extend over the entire width of a rack unit (3), and the other two walls (7a) being, constructed of metal sheets (9) which extend over the width of one well only, characterized in that the metal sheets extending over the width of one well only have projections (10) which fit into openings (11) of the metal sheets extending over an entire rack unit (8), that all the metal sheets (8, 9) of a rack unit protrude with their upper and lower ends (24, 25) into slots (12) of support grids (13, 13a), that the support grids are connected to each other by means of struts (14), and that the slots (12) define the distances between the walls.

2. A storage rack according to claim 1, characterized in that the metal sheets (8, 9) are supported at their lower ends (25) on the base surface (16) of the slots (12), and that there is a clearance between their upper ends and the base surface of the slots (12).

### Revendications

1. Casier de stockage composé de plusieurs unités de casiers, pour éléments de combustible s'étendant dans la direction longitudinale, une unité de casier comportant des puits pour la réception de chaque élément de combustible et les parois des puits étant constituées dans leur dimension longitudinale de tôles sans jointures, deux parois opposées (7) d'un puits (4) étant formées de plaques en tôle (8) qui s'étendent sur toute la largeur d'une unité de casier (3), et les deux autres parois (7a) d'un puits étant constituées par des plaques en tôle (9) qui ne présentent que la largeur d'un puits, caractérisé en ce que les plaques en tôle (9) présentant la largeur d'un puits sont munies de languettes (10) qui sont verrouillées dans des évidements (11) des plaques en tôle (8) présentant la largeur d'une unité de casier, en ce que toutes les plaques en tôle (8, 9) d'une unité de casier pénètrent avec leurs extrémités supérieure et inférieure (24, 25) dans des fentes (12) de grilles de maintien (13, 13a), en ce que les grilles de maintien sont reliées ensemble par des traverses (14) et en ce que la distance des parois l'une par rapport à l'autre est donnée par les fentes (12).

2. Casier de stockage selon la revendication 1, caractérisé en ce que les plaques en tôle (8, 9) sont appliquées avec leur extrémité inférieure (25) sur la surface de base (16) des fentes (12) et en ce qu'un jeu existe entre leurs extrémités supérieures (24) et la surface de base des fentes (12).

Fig.1

Fig.2

Fig.4

Fig.5          Fig.3

Fig.6

Fig.7